# EUROPEAN PATENT APPLICATION

(11) **EP 2 100 819 A1**
(43) Date of publication of application: **16.09.2009**
(21) Application number: 08250845.8
(22) Date of filing: 12.03.2008
(51) Int. Cl.: B65D 25/20, A01K 5/01

(54) **Base for container**

(71) Applicant: Petfast Limited, Wilmslow Cheshire SK9 1AA (GB)
(72) Inventor: Collins, Neil Simon, Wilmslow, Cheshire, SK9 4AG (GB); Collins, Mark Gordon, Wilmslow, Cheshire, SK9 4AG (GB)
(74) Representative: Wilson Gunn

(57) **Abstract**

A base (2) for a disposable pet food container (1) which is provided with a protruding region (12) on a lower surface (11) of the base (2) that is covered with an adhesive layer (13). The adhesive layer (13) allows the container to be adhered to a support surface. As the protruding region (12) preferentially contacts the support surface before the remainder of the lower surface, the bulk of the weight of the container (1) is caused, at least initially, to act through the protruding region (12). This encourages a sufficient contact to be made between the lower surface (11) of the base (2) and the support surface to adhere the container (1) to the support surface without requiring an application of force that is great enough to cause deformation of the container (1).

## Description

### TECHNICAL FIELD OF THE INVENTION

The present invention relates to a base for a container, and particularly although not exclusively to a base for a disposable pet food container. The present invention also relates to a container.

### BACKGROUND OF THE INVENTION

Inherent in contemporary society is the pursuit to increase convenience and diminish exertion wherever possible. This transcends from aspects of business to personal life. Pets contribute a large part to people and their families and due to their loyalty and companionship they are increasingly treated as 'one of the family'. This is manifested through indulgent feeding of pets, particularly cats and dogs.

The current method of such feeding involves buying large bags of dry food and/or tins, transporting this food, opening said bags/tins, transferring the food to a separate bowl, re-sealing or disposing of said bags/tins, placing the bowl on the floor and, after consumption, washing the bowl and surrounding affected area. This is a time consuming and sometimes unhygienic process.

Often, during consumption of the food, the bowl will slide across the floor due to contact with the feeding animal, resulting in food being spilled out of the bowl over a large area. This wastes food and also creates a large area that needs to be cleaned. In addition, this bowl movement can result in food spilling onto the outside of the bowl itself. This adds further to the cleaning process and so increases the likelihood that the bowl will not be thoroughly cleaned after use. Thus there are current hygiene problems that affect both the pet and the owner. In addition, the spillage of food onto the floor and bowl sides is aesthetically displeasing, especially if not properly cleaned up.

Furthermore, the movement of the bowl, during consumption of the food, may be detrimental to the pet's digestion.

When an owner is travelling with his pet it is often necessary for the owner to carry the pet's food with him and prepare it and serve it in locations that are not really suitable for such tasks. In such situations it is difficult for the pet owner to clean the food bowl after use. This creates an inconvenience for the owner and can lead to problems of hygiene if the bowl is not washed immediately after use. Furthermore, since pet food is often purchased in bulk, such as in large bags, it is not in a suitable form for easy transportation. As a result the pet owner may have to carry more pet food than he needs for the journey and carry the excess back.

In an attempt to address the above problems, US5009310 discloses a disposable container for storing and dispensing pet food. The disposable container is totally self-contained so that the entire meal can be served and the entire container discarded after use. The container includes adhesive on the bottom so the container will not move as an animal eats from the dish. However, this proposal has apparently found no commercial success.

The applicant has sought to produce a more commercially viable solution to the above problems. In doing so the applicant has reduced the amount of material used to make the container. This decreases cost while producing advantages for the environment. However, reducing the amount of material making up the container creates new problems. As the amount of material is reduced, the strength and rigidity of the container decreases. It is often the case that, in use, sufficient adhesion between the base and support surface, through the adhesive, cannot be achieved without the application of force to the container. Since the rigidity and strength of the container is reduced, this applied force can cause the container to deform. This is undesirable as it decreases the integrity of the container and is likely to cause spillage of the pet food. An additional problem of minimising container material is that the weight of the container is minimised. This decreases the weight acting through the adhesive material and so makes it more difficult for a sufficient contact to be made between the base and support surface, which may result in sliding of the container during consumption, causing the problems listed above.

### OBJECT OF THE INVENTION

It is the object of embodiments of the present invention to overcome, or at least reduce, the problems discussed above and enable production of a commercial viable pet food container.

### SUMMARY OF THE INVENTION

According to a first aspect of the present invention there is provided a base for a container, said base having a lower surface via which the base is intended to be supported when in use, the lower surface comprising at least one protruding region which protrudes outwardly from the remainder of the lower surface, the at least one protruding region having an adhesive provided thereon arranged to adhere the base to a surface on which it is supported.

The adhesive may only be provided on the protruding region.

According to a second aspect of the present invention there is provided a container having a base according to the first aspect of the invention.

It is found that where a protruding region comprising an adhesive is provided on the base of a container, the protruding region preferentially contacts a support surface on which the base of the container is placed, before the remainder of the lower surface of the base, causing, at least initially, the bulk of the weight of the container to act through the protruding region and so encouraging the adhesive to form a better bond with the surface than would otherwise be the case. This reduces the need to apply external force to the container to ensure sufficient adhesion to the surface, and thus helps avoid application of force that is great enough to cause deformation of the container.

In one embodiment the base is unitarily formed with the container.

The protruding region may be of any shape and preferably is generally centrally located on said lower surface of the base.

Preferably the protruding region is formed in a decorative shape, for example in the shape of an animal's paw which provides aesthetic appeal to pet owners.

Preferably a release paper is releasably attached to the outer surface of the adhesive.

Preferably, said release paper comprises means to facilitate ease of removal of the release paper from the adhesive layer.

Preferably, said means of removal of the release paper is a pull tab located on the periphery of said release paper.

The adhesive may be provided in the form of an adhesive material provided on the protruding region on the base. The material may have an inner surface contacting the base, and an outer surface intended to contact a support surface on which the base is supported.

With this arrangement, the inner surface of the adhesive material is preferably of greater adhesive strength than the outer surface of the adhesive material such that upon removal of the container from the support surface said adhesive material remains attached to said lower surface of the base as opposed to the support surface.

Preferably the container comprises a sidewall, said sidewall extending from the base, said sidewall having an inner and an outer surface and terminating in a flange at its free edge. The sidewall may be tubular. The container may take the form of a bowl.

Preferably the container comprises a sealing cover, having a lower and upper surface and having its lower surface releasably attached to said sidewall such that, when the sealing cover is attached, the container forms a substantially sealed enclosure. In particular the sealing cover, together with the container, may form modified atmospheric packaging (MAP).

Preferably, said sealing cover comprises means to facilitate ease of removal from the container.

Preferably, said means of removal of the sealing cover is a pull tab located on the periphery of the sealing cover.

Preferably the container contains pet food, for example dog food or cat food.

Preferably the container is moulded from a plastics material, and may be vacuum moulded from a sheet of such material. The sheet material may be of thickness of 500 micrometres or less. In particular it may be of thickness in the range 200 to 400 micrometres. Any suitable, preferably food grade, material may be used. In one embodiment a polyethylene material such as APET is used. This material may be coated with another material, for example polyester (EVA/EVOH) to serve as a barrier layer. In this arrangement the polyethylene layer may be of thickness in the range 250 to 350 micrometres, and the polyester barrier layer of thickness in the range 10 to 15 micrometres.

According to a third aspect of the present invention there is provided a method of use of a container according to the second aspect of the invention having a sealing cover, said method comprising the steps of removing the sealing cover from the container, adhering the base of the container to a support surface by means of the adhesive comprised in the base, removing the container from the support surface and disposing of the container.

Where a release paper is provided the method preferably includes the step of removing it prior to adhering the container to the support surface. Preferably the method of use also comprises disposing of the release paper.

Preferably the method of use comprises disposing of the sealing cover.

All of the features described herein may be combined with any of the above aspects, in any combination.

### BRIEF DESCRIPTION OF THE DRAWING FIGURES

For a better understanding of the invention, and to show how embodiments of the same may be carried into effect, reference will now be made, by way of example, to the accompanying diagrammatic drawings in which:
Figure 1 shows a view from below a disposable pet food container;
Figure 2 shows a section view of a disposable pet food container of Figure 1 taken along the line II-II of Figure 1; and
Figure 3 shows a perspective view of a disposable pet food container.

### DETAILED DESCRIPTION OF THE PREFERRED EMBODIMENT OF THE INVENTION

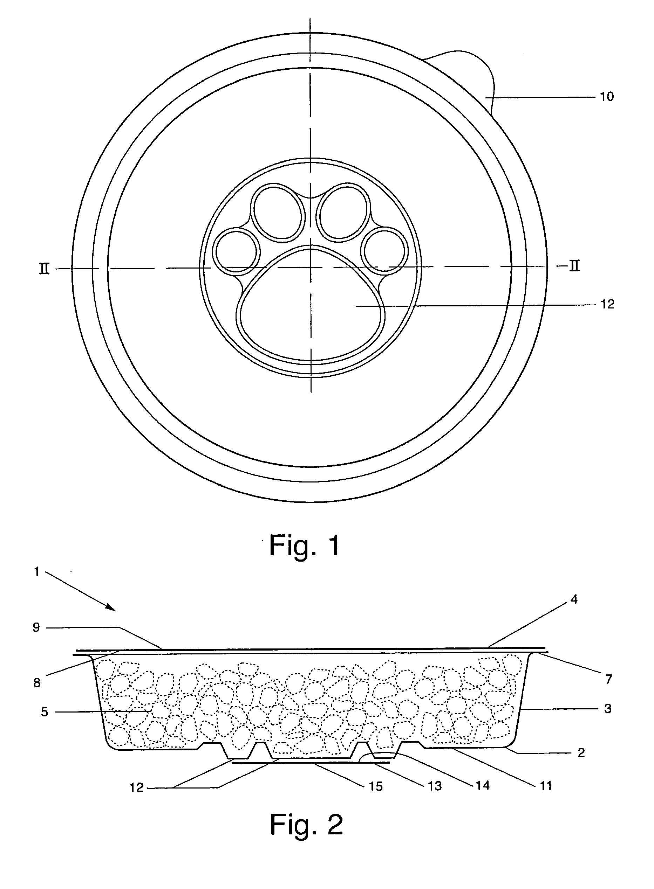

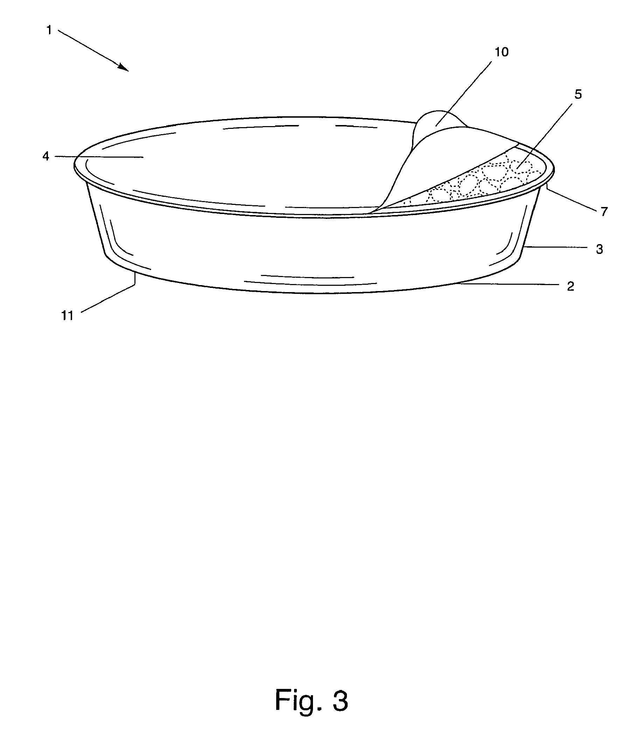

Referring to Figures 1, 2 and 3 there is shown a disposable pet food container 1. The container comprises a substantially circular base 2 with a sidewall 3 extending upwardly around the periphery of the base and terminating in a flange 7 at its free end. Pet food 5 is provided in the container and the container is sealed with a cover film 4, forming modified atmospheric packaging.

The sealing cover has a lower surface 8 and an upper surface 9. Said lower surface is releasably attached to said flange such that, when the sealing cover is attached, the container forms a sealed enclosure. The flange allows the sealing cover to be heat sealed to the container.

A pull tab 10 is located on the periphery of the sealing cover to provide for easy removal of said cover from the flange, in order to reveal the food within the container to allow for consumption.

The base comprises a lower surface 11 via which the base is intended to be supported when in use. The lower surface comprises spaced apart protruding regions 12, which protrude outwardly from the remainder of the surface, and form a stylised image of the underside of an animal's paw.

The protruding regions extend outwardly beyond the bulk of the remainder of the lower surface of the container by about 3 millimetres. The protruding regions are covered with a single layer of adhesive material 13 having the outline shape of an animal's paw. The adhesive material 13 comprises an inner surface 14 and an outer surface 15 and is arranged to adhere the base to a surface on which it is supported.

By virtue of their protruding, the protruding regions preferentially contact the support surface before the remainder of the lower surface, causing, at least initially, the bulk of the weight of the container to act through the protruding region. This encourages a sufficient contact to be made to adhere the container to the surface, between the base and support surface, when the container is placed on the support surface, without requiring an application of force that is great enough to cause deformation of the container.

The outer surface of the adhesive layer is releasably attached to a release paper 16 having a silicone coating. A pull tab (not shown) is located on the periphery of said release paper. The pull tab allows for ease of removal of the release paper from the adhesive material. The inner surface of the adhesive material is of greater adhesive strength than the outer surface of the adhesive material such that upon removal of the container from the support surface said adhesive material remains attached to said lower surface of the base as opposed to the support surface.

The base of the container is vacuum formed from a sheet of about 300 micrometre gauge transparent, flexible polyethylene (APET) coated on the outside with about 12 micrometre gauge polyester (EVA/EVOH). The ease with which the base can be crumpled up is a function of the material gauge used and the smooth design of the sidewall and base, with as thin a gauge as possible to ensure an adequate balance of rigidity and economic disposability.

The containers are to be sold either singly or in a multi pack configuration. Each container holds enough food for a single meal serving for a pet. The pet owner purchases the requisite number of containers and transports them to the location of pet feeding. The sealing cover is removed and can be disposed of and the release paper is removed and may be disposed of. The container is placed onto a support surface, typically a floor, and adheres to the support surface. This adhesion holds the container in place as the pet feeds from it. After consumption of the pet food, the container may be disposed of.

It is of course to be understood that the invention is not limited to the details of the above embodiments, which are by way of example only. Many variations are possible without departing from the invention.

## Claims

1. A base for a container, said base having a lower surface via which the base is intended to be supported when in use, the lower surface comprising at least one protruding region which protrudes outwardly from the remainder of the lower surface, the at least one protruding region having an adhesive provided thereon arranged to adhere the base to a surface on which it is supported.

2. A base as claimed in claim 1 where a release paper is releasably attached to an outer surface of the adhesive and comprises means to facilitate ease of removal of the release paper from the adhesive.

3. A base as claimed in either claim 1 or 2 where an inner surface of the adhesive is of greater adhesive strength than an outer surface of the adhesive such that upon removal of the container from a support surface said adhesive remains attached to said lower surface of the base as opposed to the support surface.

4. A container comprising a base as claimed in any preceding claim.

5. A container as claimed in claim 4 with the container further comprising a sidewall, with said sidewall terminating in a flange at its free edge, and a sealing cover which is releasably attached to the sidewall.

6. A container as claimed in claim 5 where said sealing cover comprises means to facilitate ease of removal of the sealing cover from the container.

7. A container as claimed in claims 5 or 6 where the sealing cover, together with the container, forms modified atmospheric packaging (MAP).

8. A container as claimed in any of claims 4-7 where the container contains pet food.

9. A container as claimed in any of claims 4-8 where the container takes the form of a bowl.

10. A container as claimed in any of claims 4-9 where the container is moulded from a plastics material.

11. A container as claimed in claim 10 where the plastics material is sheet plastics material of thickness 500 micrometres or less.

12. A container as claimed in claim 11 where the plastics material is sheet plastics material of thickness 200 to 400 micrometres.

13. A container as claimed in claim 12 where the plastics material is sheet plastics material of thickness 250 to 350 micrometres.

14. A container as claimed in any of claims 10-13 where the plastics material is coated with a material which acts as a barrier layer.

15. A method of use of a container, said container comprising a base having a lower surface via which the base is intended to be supported when in use, the lower surface comprising at least one protruding region which protrudes outwardly from the remainder of the lower surface, the at least one protruding region having an adhesive provided thereon arranged to adhere the base to a surface on which it is supported and with said method comprising the steps of adhering the base of the container to a support surface by means of the adhesive comprised in the base, removing the container from the support surface and disposing of the container.

16. A method according to claim 15 where the container comprises a sealing cover and the method comprises the step of removing the sealing cover.

17. A method according to claim 16 comprising the additional step of disposing of the sealing cover.

18. A method of use of a container according to any of claims 15-17 wherein a release paper is releasably attached to an outer surface of the adhesive and said method comprises the step of removing the release paper from the adhesive prior to adhering the base of the container to a support surface by means of the adhesive.

19. A method according to claim 18 comprising the additional step of disposing of the release paper.

20. A method according to any of claims 15-19 comprising the additional step of allowing a pet to feed from the container whilst the container is adhered to the support surface.
